# EUROPÄISCHE PATENTSCHRIFT

(11) **EP 2 093 468 B1**
(45) Veröffentlichungstag und Bekanntmachung des Hinweises auf die Patenterteilung: **04.08.2010**
(21) Anmeldenummer: 09151862.1
(22) Anmeldetag: 02.02.2009
(51) Int. Cl.: F16K 41/04

(54) **Armatur**
Valve
Armature

(30) Priorität: 21.02.2008 DE 102008010313
(43) Veröffentlichungstag der Anmeldung: 26.08.2009
(73) Patentinhaber: ARI-Armaturen Albert Richter GmbH & Co. KG, 33758 Schloss Holte-Stukenbrock (DE)
(72) Erfinder: Kesselhut, Rainer, 33165 Lichtenau (DE)
(74) Vertreter: Dantz, Jan Henning

(56) Entgegenhaltungen:
- EP-A- 0 473 119
- WO-A-01/40685
- DE-A1- 3 522 011
- DE-U1- 29 810 274

## Beschreibung

Die Erfindung betrifft eine Armatur entsprechend dem Oberbegriff des Anspruchs 1.

Solche Armaturen finden in vielen Anwendungsbereichen Verwendung, beispielsweise in Form von Hub- oder Klappenventilen oder als Schieber.

Hier dienen sie vornehmlich der Regulierung bzw. dem Absperren eines Mediendurchflusses durch ein Ventilgehäuse, wobei das Absperrorgan, bei einem Hubventil ein Ventilkörper, bei dem Klappenventil eine Klappe, über eine Spindel betätigbar ist, die mittels eines Handrades oder dergleichen drehbar und/oder axial verstellbar ist.

Dabei ist die Spindel in einem am Ventilgehäuse befestigten Gehäuseteil gelagert. Um eine Abdichtung des Gehäuseteiles gegenüber der Spindel zu erreichen, ist eine Dichtungsanordnung vorgesehen, die aus einem im Gehäuseteil gesichert gelagerten Halter und einem damit formschlüssig verbundenen Dichtelement besteht, das die Spindel als Dichtring dichtend umschließt.

Eine solche Dichtungsanordnung ist aus der DE 35 22 011 A1 bekannt, eine Armatur ist aus Dokument EP 0 473 119 A1 bekannt.

Der darin gezeigte und beschriebene, als Lagerbuchse bezeichnete Halter dient der Aufnahme des Dichtelementes sowie eines Abstreifers, wobei der Abstreifer für das in dem Halter positionierte Dichtelement eine Sicherung bildet, durch die das Dichtungselement axial verschiebegesichert im Halter gehalten ist.

Zur axialen Arretierung des Halters sind radial elastisch verformbare Spreizschenkel vorgesehen, die einen umlaufenden Kragen der Stufenbohrung hintergreifen.

Der Abstreifer ist zum Schutz des Dichtelementes vor Beschädigungen durch an der Spindel sich absetzende Verschmutzungen vorgesehen, wie sie beispielsweise in Heizungsanlagen bestehen, in denen gattungsgemäße Armaturen zum Einsatz kommen, wobei der Abstreifer im genannten Stand der Technik als separates Teil eingesetzt wird.

Allerdings ist die Montage dieser Dichtungsanordnung insoweit problematisch, als sowohl der Abstreifer wie auch das Dichtelement erst nach einem Einführen des Halters eingebracht werden können, da dann der Formschluss zwischen dem Halter und dem Abstreifer erzielbar ist.

Darüber hinaus ist eine zusätzliche Dichtung zwischen dem Gehäuseteil und dem Halter erforderlich, die durch einen außenseitig an dem Halter anliegenden O-Ring gebildet wird.

Neben der geschilderten umständlichen Montage bzw. Demontage der Dichtungsanordnung ist auch deren Herstellung relativ teuer, da diese, einschließlich des O-Ringes aus einer Vielzahl von einzelnen Teilen besteht.

Der Erfindung liegt die Aufgabe zugrunde, eine Armatur der gattungsgemäßen Art so weiterzuentwickeln, dass sie kostengünstiger herstell- und montier- bzw. demontierbar ist.

Diese Aufgabe wird durch eine Armatur mit den Merkmalen des Anspruchs 1 gelöst.

Durch diese konstruktive Ausbildung wird eine Armatur geschaffen, deren Dichtungsanordnung sich insbesondere durch ihren einfachen Aufbau auszeichnet.

Dabei besteht die Dichtungsanordnung lediglich aus zwei Teilen, nämlich dem Halter mit integriertem Abstreifer, die als ein einstückiges Bauteil ausgebildet sind, und dem Dichtelement, das eine vollständige Abdichtung des Gehäuseteiles gegenüber der Spindel darstellt. Der Halter dient im Übrigen im Bereich des Abstreifers über die gesamte Länge als Spindelführung.

Auf den Einsatz eines separaten, als Dichtung fungierenden O-Ringes kann ebenso verzichtet werden wie auf einen separaten Abstreifer.

Bevorzugt besteht der Halter aus einem bezüglich seiner Abstreiffähigkeit einerseits und seiner Klemmwirkung durch die Spreizschenkel andererseits geeigneten Kunststoff, während das Dichtelement aus einem Elastomer besteht.

Nach einer vorteilhaften Weiterbildung der Erfindung ist die Dichtungsanordnung als eine vormontierte Baueinheit ausgebildet in das Gehäuseteil eingebracht. D.h., der Halter wird vor einer Montage mit dem Dichtelement bestückt und dann in die Stufenbohrung eingeschoben. Naturgemäß ist hiermit eine äußerst leichte Montage dieser Baueinheit möglich, was gleichermaßen für eine Demontage zutrifft.

Der formschlüssige Halt des Dichtelementes am Halter erfolgt mittels eines umlaufenden, im Sinne eines O-Ringes angeformten Wulstes des Dichtelementes, der in einer außenseitigen, umlaufenden Nut des Halters einliegt. Zur Außenseite hin bildet der Wulst eine Dichtfläche an der Wandung der Stufenbohrung.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Figur 1: eine erfindungsgemäße Armatur in einem Längsschnitt
- Figur 2: eine Einzelheit der Armatur entsprechend dem Ausschnitt II in Fi- gur 1.

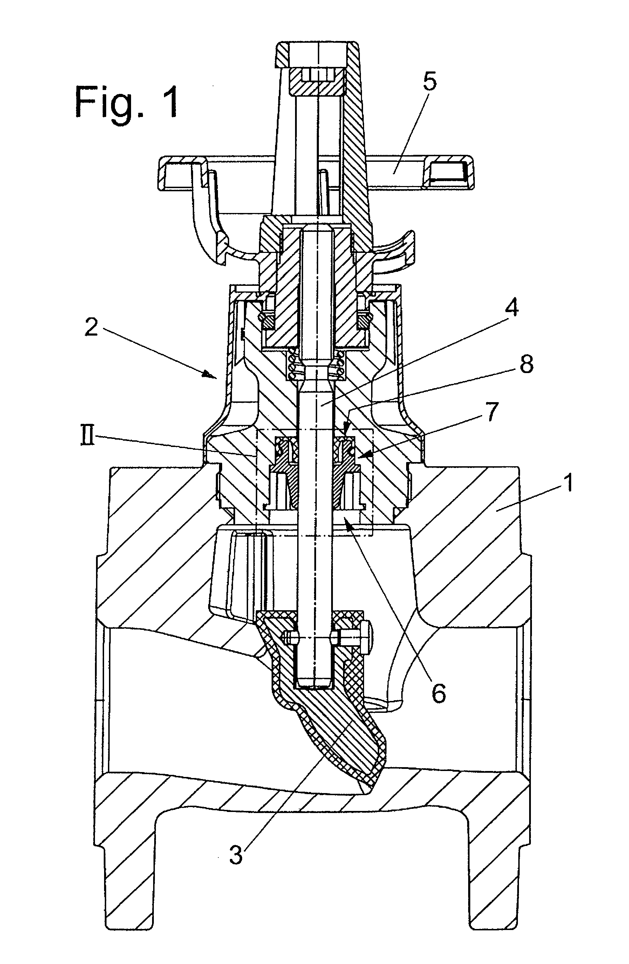

In der Figur 1 ist eine Armatur in Form eines in ein Rohrleitungssystem einbaubaren Ventils dargestellt, mit einem Ventilgehäuse 1 und einem daran befestigten Gehäuseteil 2, in dem eine mittels eines Handrades 5 betätigbare Spindel 4 gelagert ist, die an ihrem dem Handrad 5 abgewandten Ende einen Ventilkörper 3 trägt, zur Regulierung eines Volumenstroms oder zum Verschließen des Ventiles.

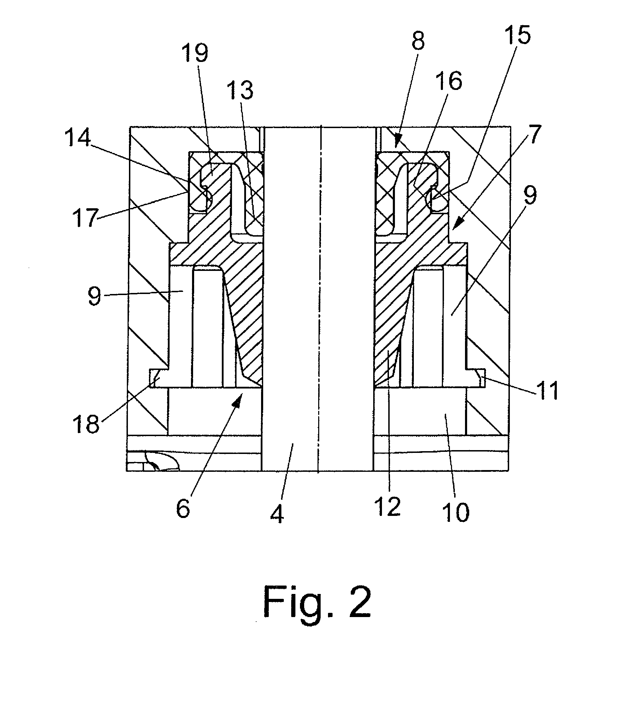

In dem Gehäuseteil 2 ist eine Dichtungsanordnung 6 positioniert, die vergrößert in der Figur 2 dargestellt ist.

Diese Dichtungsanordnung 6 umfasst einen Halter 7 sowie ein daran formschlüssig befestigtes Dichtelement 8, das mit einem Dichtring 13 umfänglich an der Spindel 4 dichtend anliegt.

Koaxial und gleichgerichtet dazu verlaufend ist eine Dichtlippe 14 des Dichtelementes 8 angeordnet, die an ihrem freien Ende mit einem radial in Richtung der Spindel 4 ausgebauchten Wulst 15 versehen ist, der in einer Nut 16 des Halters 7 einliegt. Hierzu ist der Halter 7 mit einem zylindrischen Ansatz 19 versehen, in den die Nut 16 eingebracht ist.

Andererseits liegt der Wulst 15 dichtend an einer gegenüberliegenden Wandung 17 einer Stufenbohrung 10 des Gehäuseteiles 2 an, in der die Dichtungsanordnung 6 insgesamt gelagert ist.

Koaxial zu dem Dichtring 13 weist der Halter 7 einen ringförmigen Abstreifer 12 auf, der anliegend die Spindel 4 umschließt und dabei eine Spindelführung bildet.

Die gesamte Dichtungsanordnung 6 wird in der Stufenbohrung 10 formschlüssig gegen axiales Verschieben gesichert, wozu an dem Halter 7 am äußeren Umfang Spreizschenkel 9 vorgesehen sind, die an ihrem freien Ende mit radial nach außen vorstehenden Nasen 18 versehen sind, die in eine umlaufende Nut 11 der Stufenbohrung 10 ragen, wobei die Spreizschenkel 9 elastisch verformbar sind und aufgrund der innewohnenden Rückstellkräfte selbsttätig mit ihren Nasen 18 in die Nut 11 einrasten.

Erfindungsgemäß bilden der Halter einschließlich des Abstreifers 12 und der Spreizschenkel 9 ein einstückiges Bauteil, das unter Hinzufügung des Dichtelementes 8 zu einer vormontierten Baueinheit zusammengefasst ist.

Wie deutlich erkennbar ist, kann aufgrund der Konfiguration des Dichtelementes 8, die zu einer vollständigen Abdichtung des Gehäuseteiles 2 gegenüber der Spindel 4 führt, auf zusätzliche Dichtmittel verzichtet werden.

Die Spreizschenkel 9 werden im übrigen durch Schlitzungen in axialer Richtung gebildet, so dass sie unabhängig voneinander radial auslenkbar sind.

### Bezugszeichenliste

- 1: Ventilgehäuse
- 2: Gehäuseteil
- 3: Ventilkörper
- 4: Spindel
- 5: Handrad
- 6: Dichtungsanordnung
- 7: Halter
- 8: Dichtelement
- 9: Spreizschenkel
- 10: Stufenbohrung
- 11: Nut
- 12: Abstreifer
- 13: Dichtring
- 14: Dichtlippe
- 15: Wulst
- 16: Nut
- 17: Wandung
- 18: Nasen
- 19: Ansatz

## Patentansprüche

1. Armatur, insbesondere in ein Rohrleitungssystem einbaubares Ventil, mit einer in einem Gehäuseteil (2) geführten, drehbaren und/oder axial verstellbaren Spindel (4), die durch eine in einer Stufenbohrung (10) des Gehäuseteiles (2) angeordneten Dichtungsanordnung (6) gegenüber dem Gehäuseteil (2) abgedichtet ist, wobei die Dichtungsanordnung (6) aufweist einen mit radial elastisch verformbaren Spreizschenkeln (9) versehenen Halter (7), der durch Formschluss axial gesichert im Gehäuseteil (2) gehalten ist, ein die Spindel mittels eines Dichtrings (13) dichtend umgreifendes Dichtelement (8), das axial verschiebegesichert im Halter (7) gelagert ist, und einen die Spindel (4) anliegend umschließenden Abstreifer (12), **dadurch gekennzeichnet, dass** der Abstreifer (12) und der Halter (7) einstückig ausgebildet sind und das Dichtelement (8) sowohl an einer Wandung (17) der Stufenbohrung (10) wie an der Spindel (4) dichtend anliegt.

2. Armatur nach Anspruch 1, **dadurch gekennzeichnet, dass** die Dichtungsanordnung (6) als eine vormontierte Baueinheit ausgebildet und in das Gehäuseteil (2) eingebracht ist.

3. Armatur nach Anspruch 1 oder 2, **dadurch gekennzeichnet, dass** das Dichtelement (8) eine koaxial sich gleichgerichtet zum Dichtring (13) erstreckende Dichtlippe (14) aufweist, die an ihrem freien Ende mit einem Wulst (15) versehen ist, der einerseits in eine umlaufende Nut (16) des Halters (7) formschlüssig eingreift und andererseits dichtend an der Wandung (17) der Stufenbohrung anliegt.

4. Armatur nach Anspruch 3, **dadurch gekennzeichnet, dass** die Nut (16) an der Außenseite des Halters (7) angeordnet ist.

5. Armatur nach einem der vorhergehenden Ansprüche, **dadurch gekennzeichnet, dass** sich die Spreizschenkel (9) und der Abstreifer (12) gleichgerichtet erstrecken.

6. Armatur nach einem der vorhergehenden Ansprüche, **dadurch gekennzeichnet, dass** die Spreizschenkel (7) jeweils eine radial nach außen gerichtete Nase (18) aufweisen, die in einer umlaufenden Nut (11) der Stufenbohrung (10) einliegen.

7. Armatur nach Anspruch 3, **dadurch gekennzeichnet, dass** der Halter (7) auf seiner dem Abstreifer (12) abgewandten Seite mit einem zylinderförmigen Ansatz (19) versehen ist, in den die Nut (16) eingebracht ist.

8. Armatur nach einem der vorhergehenden Ansprüche, **dadurch gekennzeichnet, dass** der Abstreifer (12) eine Spindel führung bildet.

## Claims

1. Valve fitting, in particular valve installable in a pipeline system, with a rotatable and/or axially adjustable spindle (4) which is guided in a housing part (2) and which is sealed off with respect to the housing part (2) by means of a sealing arrangement (6) arranged in a stepped bore (10) of the housing part (2), the sealing arrangement (6) having a holder (7) which is provided with radially elastically deformable spreading legs (9) and which is held, secured axially by a form fit, in the housing part (2), a sealing element (8) which sealingly surrounds the spindle by means of a sealing ring (13) and which is mounted, secured against displacement axially, in the holder (7), and a wiper (12) surrounding the spindle (4) so as to bear against the latter, **characterized in that** the wiper (12) and the holder (7) are formed in one piece, and the sealing element (8) bears sealingly both against a wall (17) of the stepped bore (10) and against the spindle (4).

2. Valve fitting according to Claim 1, **characterized in that** the sealing arrangement (6) is designed as a preassembled structural unit and is introduced into the housing part (2) .

3. Valve fitting according to Claim 1 or 2, **characterized in that** the sealing element (8) has a sealing lip (14) which extends coaxially and codirectionally with respect to the sealing ring (13) and which is provided at its free end with a bead (15) which, on the one hand, engages with a form fit into a peripheral groove (16) of the holder (7) and, on the other hand, bears sealingly against the wall (17) of the stepped bore.

4. Valve fitting according to Claim 3, **characterized in that** the groove (16) is arranged on the outside of the holder (7).

5. Valve fitting according to one of the preceding claims, **characterized in that** the spreading legs (9) and the wiper (12) extend codirectionally.

6. Valve fitting according to one of the preceding claims, **characterized in that** the spreading legs (7) have in each case a radially outward-directed nose (18) seated in a peripheral groove (11) of the stepped bore (10).

7. Valve fitting according to Claim 3, **characterized in that** the holder (7) is provided, on its side facing away from the wiper (12), with a cylindrical extension (19) into which the groove (16) is introduced.

8. Valve fitting according to one of the preceding claims, **characterized in that** the wiper (12) forms a spindle guide.

## Revendications

1. Armature, en particulier soupape pouvant être installée dans un système de conduite avec une broche (4) guidée, pouvant être tournée et/ou réglée axialement dans une partie de boîtier (2) qui est rendue étanche par un ensemble de garniture (6) disposé dans un perçage étagé (10) de la partie de boîtier (2) par rapport à la partie de boîtier (2), l'ensemble de garniture (6) présentant un support (7) pourvu de branches d'écartement (9) déformable radialement et élastiquement qui est maintenu de manière axialement bloquée par complémentarité de formes dans la partie de boîtier (2), un élément étanche (8) entourant de manière étanche la broche à l'aide d'une bague d'étanchéité (13), qui est logé de manière bloquée en déplacement axial dans le support (7), et une racle (12) entourant de manière adjacente la broche (4), **caractérisée en ce que** la racle (12) et le support (7) sont réalisés d'un seul tenant et l'élément étanche (8) repose de manière étanche sur une paroi (17) du perçage étagé (10) ainsi que sur la broche (4).

2. Armature selon la revendication 1, **caractérisée en ce que** l'ensemble de garniture (6) est réalisé comme une unité structurelle prémontée et est introduit dans la partie de boîtier (2).

3. Armature selon la revendication 1 ou 2, **caractérisée en ce que** l'élément étanche (8) présente une lèvre d'étanchéité (14) s'étendant coaxialement dirigée dans le même sens que la bague d'étanchéité (13) qui est pourvue sur son extrémité libre d'un bourrelet (15) qui s'engage par complémentarité de formes d'une part dans une rainure (16) rotative du support (7) et repose d'autre part de manière étanche sur la paroi (17) du perçage étagé.

4. Armature selon la revendication 3, **caractérisée en ce que** la rainure (16) est disposée sur le côté extérieur du support (7).

5. Armature selon l'une quelconque des revendications précédentes, **caractérisée en ce que** les branches d'écartement (9) et la racle (12) s'étendent dirigées dans le même sens.

6. Armature selon l'une quelconque des revendications précédentes, **caractérisée en ce que** les branches d'écartement (7) présentent respectivement un nez (18) dirigé radialement vers l'extérieur qui se trouve dans une rainure (11) rotative du perçage étagé (10).

7. Armature selon la revendication 3, **caractérisée en ce que** le support (7) est pourvu sur son côté éloigné de la racle (12) d'une saillie (19) cylindrique dans laquelle est introduite la rainure (16).

8. Armature selon l'une quelconque des revendications précédentes, **caractérisée en ce que** la racle (12) forme un guidage de broche.
